# EUROPÄISCHE PATENTSCHRIFT

(11) **EP 3 941 767 B1**
(45) Veröffentlichungstag und Bekanntmachung des Hinweises auf die Patenterteilung: **10.01.2024**
(21) Anmeldenummer: 20702090.0
(22) Anmeldetag: 23.01.2020
(51) Int. Cl.: B60H 1/00, B60H 1/24

(54) **KRAFTFAHRZEUG MIT EINER LÜFTUNGSEINRICHTUNG MIT MEHREREN SEPARATEN LUFTAUSSTRÖMERN**
MOTOR VEHICLE HAVING A VENTILATION DEVICE HAVING A PLURALITY OF SEPARATE AIR VENTS
VÉHICULE AUTOMOBILE COMPRENANT UN SYSTÈME D'AÉRATION COMPRENANT PLUSIEURS BUSES D'AÉRATION SÉPARÉES

(30) Priorität: 19.03.2019 DE 102019203664
(43) Veröffentlichungstag der Anmeldung: 26.01.2022
(73) Patentinhaber: Audi AG, 85045 Ingolstadt (DE)
(72) Erfinder: MICHAEL, Jörg, 85055 Ingolstadt (DE); GUYOT, Bastian, 85080 Gaimersheim (DE); ALBL, Sebastian, 85080 Gaimersheim (DE)
(86) Internationale Anmeldenummer: PCT/EP2020/051589
(87) Internationale Veröffentlichungsnummer: WO 2020/187466

(56) Entgegenhaltungen:
- WO-A1-2020/108856
- WO-A1-2020/108858
- DE-A1-102008 031 695
- DE-A1-102015 112 898
- DE-A1-102016 116 115
- DE-A1-102017 003 550
- FR-A1- 2 717 747
- US-A1- 2001 029 162

## Beschreibung

Die Erfindung betrifft ein Kraftfahrzeug mit einer Lüftungseinrichtung mit mehreren separaten Luftausströmern sowie einer den Lüftungsbetrieb steuernden Steuerungseinrichtung.

Moderne Kraftfahrzeuge, wie beispielsweise in DE 10 2016 116 115 A1 beschrieben, verfügen über Lüftungseinrichtungen mit mehreren separaten Luftausströmern, über die steuerbar Luft in den Innenraum des Fahrzeugs geblasen werden kann. Hierzu dient eine Steuerungseinrichtung, die den Lüftungsbetrieb steuert, also die Verteilung der Luft zu den entsprechenden Luftausströmern sowie den Öffnungsgrad, die Ausblasrichtung etc. Um dies zu steuern, ist beispielsweise in DE 10 2016 116 115 A1 ein Display vorgesehen, an dem entsprechende, personenindividuelle Einstellungen vorgenommen werden können, um der jeweiligen, auf einem der beiden Sitze sitzenden Personen nach Wunsch Luft zuzuführen, wobei bei dem dort beschriebenen System auch Bereiche, die luftzugsfrei sein sollen, definiert werden können. Dies ermöglicht es also, über die dort im Bereich des Armaturenbretts vorgesehenen Luftausströmer den in Fahrtrichtung gesehen hinter dem Armaturenbrett sitzenden Personen individuell Luft zuzuführen.

Über diese im Armaturenbrettbereich befindlichen Lüftungsdüsen soll den auf den Vordersitzen befindlichen Personen Luft in jeder einnehmbaren Sitzposition zugeführt werden können, also unabhängig davon, ob der Sitz sehr nahe am Armaturenbrett oder relativ weit zurückgeschoben ist. Bei Kraftfahrzeugen mit hohem Autonomisierungsgrad hinsichtlich des Fahrens, die also idealerweise auch vollständig autonom fahren können, können insbesondere die Vordersitze jedoch sehr weit nach hinten verstellt werden, da der Fahrer, aber auch der Beifahrer, nicht mehr in den eigentlichen Fahrbetrieb eingebunden sind. Die Sitze sind dann sehr weit vom Armaturenbrett respektive dem Cockpit entfernt, so dass es nicht immer möglich ist, über die dort verbauten Luftausströmer die Personen zu erreichen, so dass eine effiziente Belüftung dann nicht sichergestellt ist.

Aus DE 10 2015 112898 A1 ist ein Klimatisierungs- und Belüftungssystem mit einem Dachausströmer bekannt, wobei es vorgehen ist, dass in Abhängigkeit der Sitzposition einer sitzenden Person verschiedene Zonen des Innenraums belüftet werden.

Der Erfindung liegt damit das Problem zugrunde, ein demgegenüber verbessertes Kraftfahrzeug anzugeben.

Zur Lösung dieses Problems ist bei einem Kraftfahrzeug der eingangs genannten Art erfindungsgemäß vorgesehen, dass an wenigstens einem sich in Fahrzeuglängsrichtung erstreckenden Luftleitkanal mehrere in Fahrzeuglängsrichtung verteilt angeordnete Luftausströmer angebunden sind, wobei der Öffnungsgrad jedes Luftausströmers über die Steuerungseinrichtung in Abhängigkeit wenigstens einer Positionsinformation wenigstens eines im Fahrzeug angeordneten, in Fahrzeuglängsrichtung verfahrbaren Sitzes, dem die Luftausströmer zugeordnet sind, einstellbar ist.

Bei dem erfindungsgemäßen Kraftfahrzeug sind mehrere in Fahrzeuglängsrichtung hintereinander, jedoch beabstandet zueinander vorgesehene Luftausströmer vorgesehen, die an einem gemeinsamen, sich in Fahrzeuglängsrichtung erstreckenden Luftleitkanal angebunden sind, also über diesen versorgt werden. Jeder Luftausströmer kann über die Steuerungseinrichtung individuell geöffnet oder geschlossen werden. Dieser Öffnungs- und Schließbetrieb wird über die Steuerungseinrichtung nun erfindungsgemäß in Abhängigkeit einer Positionsinformation eines Sitzes, dem die mehreren Luftausströmer zugeordnet sind, gesteuert, also in Abhängigkeit der von der auf dem Sitz befindlichen Person individuell einstellbaren Sitzposition. Da ein solcher Sitz in Fahrzeuglängsrichtung relativ weit verstellbar ist, jedoch die Anordnung der Luftausströmer diese Verstellmöglichkeit quasi abbildet, kann demzufolge je nach eingestellter Sitzposition ein spezifischer Luftausströmer bedient werden, der bestmöglich in Bezug auf die Sitzposition positioniert ist, so dass trotz weiter Verfahrbarkeit eines Sitzes stets eine gute Belüftung sichergestellt ist. Die Luftausströmer sind natürlich in Richtung dieses Sitzes respektive der auf ihm befindlichen Person gerichtet. Zur Variation des Öffnungsgrads sind entsprechende Aktoren vorgesehen, die mit entsprechenden Verschlussmitteln wie beispielsweise Lamellenverschlüssen oder dergleichen der einzelnen Luftausströmer zusammenwirken und die über die Steuerungseinrichtung gesteuert werden können.

Im einfachsten Fall ist die Steuerung eine reine Auf/Zu-Steuerung, das heißt, dass der jeweilige Luftausströmer nur geschlossen oder nur vollständig geöffnet werden kann. Alternativ dazu ist auch jedwede Zwischenposition einstellbar. Neben der Variation des Öffnungsgrads kann zusätzlich auch die Ausblasrichtung variiert werden, wiederum bevorzugt in Abhängigkeit der Positionsinformation, um quasi die Ausblasrichtung eines positionsmäßig zu verwendenden Luftausströmers noch weiter an die tatsächliche Sitzposition anpassen zu können.

Über diese in Fahrzeuglängsrichtung verteilt angeordneten Luftausströmer in Verbindung mit der erfindungsgemäßen positionsabhängigen Steuerung kann demzufolge auch bei sehr weit verfahrbaren Sitzen eine bestmögliche Belüftung erfolgen. Im Bereich des Armaturenbretts respektive des Cockpits können darüber hinaus natürlich, letztlich wie bisher, ebenfalls separat bedienbare und gegebenenfalls auch über die Steuerungseinrichtung steuerbare Luftausströmer vorgesehen sein, die insbesondere dann genutzt werden, wenn der oder die Sitze nahe am Armaturenbrett positioniert sind, die bei Bedarf aber auch dann nicht bedient werden, wenn die Sitze sehr weit nach hinten gefahren sind, da dann die Luft über andere Luftausströmer ausgebracht wird.

Üblicherweise sind zwei in Fahrzeuglängsrichtung verfahrbare Sitze, nämlich die beiden Vordersitze vorgesehen, denen erfindungsgemäß jeweils mehrere separate Luftausströmer, die an einem Luftleitkanal angebunden sind, zugeordnet sind. Hierüber ist also eine entsprechende Belüftung beider längsverstellbarer Sitze möglich. An dieser Stelle jedoch der Hinweis, dass es sich bei den beiden Sitzen natürlich nicht zwingend um die beiden Vordersitze handeln muss, wenn das Fahrzeug mehrere Sitzreihen hat, die jeweils individuell verstellt werden können, das heißt, dass an einem längslaufenden Luftleitkanal gegebenenfalls auch mehrere Luftausströmer, die unterschiedlichen, in Fahrzeuglängsrichtung hintereinander angeordneten Sitzen zugeordnet sind, gleichzeitig geöffnet werden können.

In Weiterbildung der Erfindung kann vorgesehen sein, dass, gesehen in Fahrzeugquerrichtung, mehrere sich in Fahrzeuglängsrichtung erstreckende Luftleitkanäle vorgesehen sind, an denen jeweils mehrere Luftausströmer, die über die Steuerungseinrichtung in ihrem Öffnungsgrad einstellbar sind, vorgesehen sind. Das heißt, dass über die Fahrzeugbreite mehrere entsprechende, längslaufende Luftleitkanäle mit separat ansteuerbaren Luftausströmern vorgesehen sind, um die Möglichkeit zu bieten, einem Sitz mehrere, in Querrichtung gesehen verteilt angeordnete Luftausströmer zuzuordnen, die bei Bedarf auch simultan geöffnet werden können.

Die Steuerungseinrichtung steuert grundsätzlich zum Verteilen der Luft in den mehreren Luftleitkanälen entsprechende Ventile oder Klappen, worüber eingestellt werden kann, welchem oder welchen Luftleitkanälen grundsätzlich Luft zugeführt werden soll, worüber aber auch das einem Luftleitkanal zugeführte Luftvolumen eingestellt werden kann, so dass durch eine entsprechende Ventil- oder Klappensteuerung über die Steuerungseinrichtung jedwede Luftverteilung innerhalb der Luftleitkanäle gesteuert werden kann und dann individuell über die entsprechenden Luftausströmer wiederum eine sitzspezifische Steuerung vorgenommen werden kann.

Wie bereits vorstehen angesprochen, besteht grundsätzlich die Möglichkeit, die an einem Luftleitkanal angebundenen Luftausströmer mehreren Sitzen zuzuordnen. Angesprochen wurde bereits der Fall, dass die Luftausströmer zwei hintereinander angeordneten Sitzen zugeordnet sind. Jedoch kann eine Zuordnung auch zu zwei nebeneinander angeordneten Sitzen erfolgen. Zu diesem Zweck kann wenigstens ein, gesehen in Fahrzeugquerrichtung, im Bereich der Fahrzeugmitte verlaufender Luftleitkanal zwischen den beiden Sitzen vorgesehen sein. Das heißt, dass dieser quasi mittige Luftleitkanal beispielsweise zwischen den beiden Vordersitzen verläuft, wobei links und rechts vom Luftleitkanal abgehende Ausströmer vorgesehen sind. Die Luftausströmer einer Seite sind dem Fahrersitz, die an der anderen Seite dem Beifahrersitz zugeordnet, alle werden jedoch über den gemeinsamen Luftleitkanal versorgt. Trotz dieser gemeinsamen Versorgung kann über die Steuerungseinrichtung, die wie beschrieben den Öffnungsgrad und gegebenenfalls die Ausblasrichtung steuert, eine individuelle Belüftung des einen oder anderen Bereichs erfolgen.

Alternativ dazu, nur einen Luftleitkanal zwischen beiden Sitzen vorzusehen, ist es natürlich denkbar, zwischen den beiden Sitzen zwei separate Luftleitkanäle vorzusehen, wobei am einen Luftleitkanal die dem einen Sitz zugeordneten Luftausströmer und am anderen Luftleitkanal die dem anderen Sitz zugeordneten Luftausströmer angebunden sind.

Neben der mittigen Anordnung eines solchen oder solcher Luftleitkanäle besteht aber auch die Möglichkeit, einen Luftleitkanal an einer anderen Fahrzeugposition, gesehen in Fahrzeugquerrichtung, anzuordnen. Ein oder jeweils ein Luftleitkanal mit daran angebundenen Luftausströmern kann sich beispielsweise unterhalb eines Sitzes erstrecken, also quasi im Bodenbereich, um so der Person oder der Sitzunterseite zur Sitzkühlung Luft zuführen zu können.

Eine alternative Positionierung eines solchen oder jeweils eines solchen Luftleitkanals mit daran angebunden Luftausströmern kann auch im Bereich der Seiten des Fahrzeugbodens sein, das heißt, dass, ähnlich wie im Bereich der Fahrzeugmitte, sich ein solcher Luftleitkanal seitlich des Sitzes erstreckt und die Luft von der Seite zugeblasen wird.

Neben einer solche, quasi bodennahen Anordnung eines Luftleitkanals ist es auch denkbar, einen oder jeweils einen Luftleitkanal mit daran angebundenen Luftausströmern im Bereich einer benachbart zu den jeweiligen Sitzen angeordneten Tür zu führen, das heißt, dass ein solcher Luftleitkanal in diesem Fall höher verläuft als bei bodennaher Anordnung. Dieser türseitige Luftleitkanal kann sich auch von einer vorderen Tür zu einer hinteren Tür erstrecken, das heißt, dass bei geschlossenen Türen entsprechende Kanalabschnitte in den jeweiligen Türen miteinander kommunizieren und sich demzufolge ein insgesamt durchlaufender Luftleitkanal ergibt. Bei geöffneten Türen ist dieser Luftleitkanal unterbrochen, in diesem Fall erfolgt aber üblicherweise auch keine Belüftung. Kommen im hinteren Bereich keine Türen zum Einsatz, so kann gleichermaßen auch dort im Bereich der Fahrzeugseite ein entsprechender Luftleitkanal weitergeführt werden.

Schließlich ist es denkbar, dass sich ein oder jeweils ein Luftleitkanal mit daran angebundenen Luftausströmern auch im Bereich des Dachs erstreckt, das heißt, dass die Luftausströmer oberhalb der Sitze respektive Personen angeordnet sind.

Selbstverständlich können eine Mehrzahl entsprechender Luftleitkanäle vorgesehen sein, die also, gesehen in Fahrzeugquerrichtung, beliebig verteilt sein können. Beispielsweise ist ein oder sind zwei mittig verlaufende Luftleitkanäle vorgesehen, zwei unterhalb der Sitze verlaufende Luftleitkanäle, zwei an den Bodenseiten oder in den Türen verlaufende Luftleitkanäle sowie zwei dachseitig verlaufende Luftleitkanäle. Alle Luftleitkanäle werden über die Steuerungseinrichtung sowie ein Klimagerät, das über die Steuerungseinrichtung gesteuert wird, entsprechend mit Luft versorgt, wobei die Luftversorgung wie ausgeführt durch eine entsprechende Ventil- oder Klappensteuerung etc. kanalindividuell und durch Ansteuerung der entsprechenden, den Luftausströmern zugeordneten Aktoren auch ausströmerindividuell gesteuert wird.

Wie beschrieben erfolgt die Ansteuerung der Luftausströmer in Abhängigkeit wenigstens einer Positionsinformation eines Sitzes. Um diese Information zu erfassen, ist gemäß einer Weiterbildung der Erfindung dem oder jedem Sitz eine Positionserfassungseinrichtung zugeordnet, die die wenigstens eine Positionsinformation liefert. Bei dieser Positionserfassungseinrichtung kann es sich beispielsweise um eine elektrische Sitzverstellung handeln, über die die auf dem Sitz befindliche Person den Sitz individuell einstellen kann, insbesondere aber auch seine Fahrzeuglängsposition einstellen kann. Da über diese elektrische Sitzverstellung die Sitzposition grundsätzlich zu verändern ist, kann diese Sitzverstelleinrichtung auch gleichzeitig als Positionserfassungseinrichtung verwendet werden, das heißt, dass entsprechende Steuerungsdaten dieser Sitzverstelleinrichtung gleichzeitig die Positionsinformationen liefern, so dass keine zusätzliche Positionssensorik erforderlich ist. Alternativ dazu besteht natürlich die Möglichkeit, jeweils sitzindividuelle Positionsserfassungssensoren als Positionserfassungseinrichtung vorzusehen, die, ähnlich wie die Sitzeinrichtung, dann in geeigneter Weise über einen Fahrzeugbus oder dergleichen mit der Steuerungseinrichtung des Lüftungssystems kommunizieren.

Gemäß einer vorteilhaften Weiterbildung der Erfindung kann vorgesehen sein, dass die Positionserfassungseinrichtung zusätzlich zum Erfassen der Sitzposition in Fahrzeuglängsrichtung auch der Erfassung der Höhe des Sitzes und/oder der Neigung einer Sitzlehne ausgebildet ist, wobei die Steuerungseinrichtung zusätzlich zur Berücksichtigung dieser Sitzinformation ausgebildet ist. Sinngemäß kann über die Positionserfassungseinrichtung, die natürlich auch mehrteilig sein kann und beispielsweise neben der elektrischen Sitzverstellung auch eine Kamera oder dergleichen umfassen kann, eine weitergehende Positionsveränderung des Sitzes in Bezug auf seine Höhe oder die Lehnenneigung erfasst werden. Diese Informationen können ebenfalls in den Steuerungsbetrieb eingehen und die Auswahl des Luftausströmers beeinflussen, oder die verstellbare Ausströmrichtung eines Luftausströmers beeinflussen. Denn über diese Informationen kann erfasst werden, wie hoch eine Person sitzt, oder wie weit nach hinten oder vorne sie geneigt sitzt. Mithin können also Informationen über die konkrete Sitzposition der Person erfasst werden, was wiederum in die entsprechende Luftausströmeransteuerung eingehen kann. Dies ist insbesondere dann zweckmäßig, wenn über die Steuerungseinrichtung zusätzlich zum Öffnungsgrad auch die Luftausblasrichtung der Luftausströmer über einen geeigneten Aktor einstellbar ist, wobei diese Ausströmrichtung bevorzugt sowohl in horizontaler als auch in vertikaler Richtung eingestellt werden kann.

In Weiterbildung der Erfindung können wenigstens eine Einrichtung zur Erfassung wenigstens einer Personeninformation betreffend eine auf einem Sitz befindliche Person vorgesehen sein, wobei die Steuerungseinrichtung zur Steuerung in Abhängigkeit auch der Personeninformation ausgebildet ist. Über diese Erfassungseinrichtung kann einerseits eine Sitzbelegungserfassung erfolgen, das heißt, dass erfasst wird, ob ein Sitz besetzt ist oder nicht. Ist ein Sitz nicht besetzt, ist dort auch nicht unbedingt Luft auszublasen. Eine solche Sitzbelegungsinformation kann auf einfache Weise über einen integrierten Sitzsensor erfasst werden. Alternativ ist hierzu aber auch eine Kamera verwendbar, über die der Fahrzeuginnenraum überwacht wird. Über diese Kamera können darüber hinaus aber auch Informationen über eine auf einem Sitz befindliche Person erfasst werden, beispielsweise in welcher Höhe sich der Kopf befindet, um gestützt auf diese Personeninformation dann die Luftausströmer entsprechend zu steuern, um gezielt beispielsweise den Kopf anzublasen, oder, wenn dies von der Person über die ihr zugängliche Systemsteuerung ausgeschlossen wird, in diesen Bereich gerade nicht zu blasen. Eine solche Kamera kann also noch zusätzliche Informationen über die reine Sitzbelegung hinaus liefern, die für die Steuerung des Lüftungssystems zweckmäßig sind. Das heißt, dass die Einrichtung zur Erfassung der Personeninformation demzufolge zur Erfassung einer Sitzbelegung und/oder der Position bestimmter Körperteile einer auf einem Sitz befindlichen Person ausgebildet ist.

Wie beschrieben besteht üblicherweise die Möglichkeit, dass die eine oder die mehreren Personen im Fahrzeug individuell, also zonenweise die Belüftung in ihrem Bereich einstellen können. Hierzu ist es entweder denkbar, ein gemeinsames Einstellmittel zum personenindividuellen Einstellen der Lüftungseinrichtung vorzusehen, beispielsweise im vorderen Bereich des Armaturenbretts in Form eines entsprechend großflächigen Displays oder dergleichen. Alternativ, oder auch zusätzlich können separate Einstellmittel vorgesehen sein, beispielsweise im Bereich der jeweiligen Türen oder im Bereich der Mittelkonsole oder des Sitzes vorgesehen sein.

Ein solches Einstellmittel ist bevorzugt in Form eines Touchscreens oder Touchfeldes ausgeführt, was ein sehr einfaches Einstellen ermöglicht, wobei im Rahmen dieses Einstellens beispielsweise neben der grundsätzlichen Luftzufuhr auch die Ausblasstärke oder Ausblasrichtung eingestellt werden kann, wie auch beispielsweise ein luftzugfreier Bereich eingestellt werden kann, beispielsweise im Kopfbereich, und wie natürlich auch die Temperatur der ausgeblasenen Luft eingestellt werden kann, was sodann über das Klimagerät eingeregelt wird.

Weitere Vorteile und Einzelheiten der Erfindung ergeben sich aus den im Folgenden beschriebenen Ausführungsbeispiel sowie anhand der Zeichnungen. Dabei zeigen:
- Fig. 1: eine Prinzipdarstellung eines erfindungsgemäßen Kraftfahrzeugs in einer Seitenansicht,
- Fig. 2: eine Prinzipdarstellung eines erfindungsgemäßen Kraftfahrzeugs in einer Aufsicht mit zwei Sitzen in einer ersten Position,
- Fig. 3: das Kraftfahrzeug aus Fig. 2 mit den beiden Sitzen in einer zweiten Position, und
- Fig. 4: das Kraftfahrzeug aus Fig. 3 mit den beiden Sitzen in einer dritten Position.

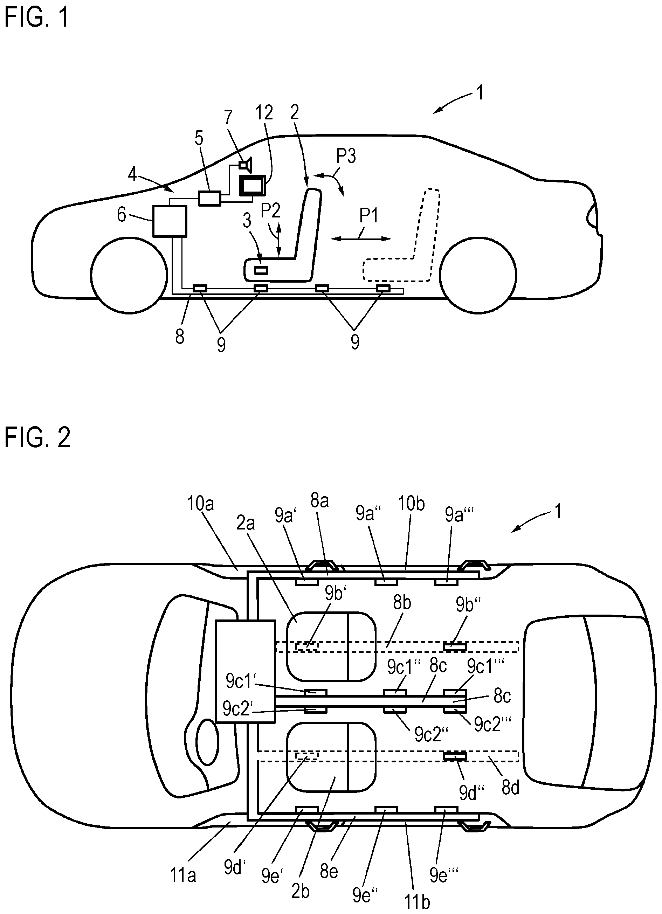

Fig. 1 zeigt ein erfindungsgemäßes Kraftfahrzeug 1, umfassend wenigstens zwei Sitze 2, von denen im gezeigten Beispiel nur ein Sitz 2 gezeigt ist. Dieser Sitz 2 ist, wie durch den Doppelpfeil P1 dargestellt ist, in Fahrzeuglängsrichtung verstellbar, er kann von der ausgezogen gezeigten Position in die weit nach hinten gefahrene, gestrichelt gezeigte Position verstellt werden. Hierzu dient eine entsprechende Sitzverstelleinrichtung 3, die gleichzeitig auch eine Positionserfassungseinrichtung zur Erfassung der Sitzposition zumindest in Bezug auf die Fahrzeuglängsrichtung dient. Über diese Sitzverstelleinrichtung 3 mit entsprechenden Tasten und Aktoren ist des Weiteren die Höhe des Sitzes, dargestellt durch den Pfeil P2, sowie die Neigung der Lehne, dargestellt durch den Pfeil P3, verstellbar, auch diese Informationen können entsprechend über die Sitzverstelleinrichtung 3 erfasst werden.

Vorgesehen ist des Weiteren eine Lüftungseinrichtung 4, umfassend eine Steuerungseinrichtung 5 sowie ein über diese gesteuertes Klimagerät 6. Der Steuerungseinrichtung 5 zugeordnet ist des Weiteren eine Einrichtung 7, hier in Form einer Kamera, die der Erfassung von Personeninformationen einer auf dem Sitz 2 befindlichen Person dient. Auch diese Informationen gehen an der Steuerungseinrichtung 5 ein.

Wie ausgeführt steuert die Steuerungseinrichtung 5 den Betrieb des Klimageräts 6, von dem aus eine Mehrzahl an Luftleitkanälen 8 abgehen, die sich in Fahrzeuglängsrichtung erstrecken. In Fig. 1 ist nur ein Luftleitkanal 8 gezeigt, die Figuren 2 - 4 zeigen, gesehen in Fahrzeugquerrichtung, fünf parallel in Fahrzeuglängsrichtung laufende Luftleitkanäle 8. Am gezeigten Luftleitkanal - gleiches gilt für alle Luftleitkanäle gemäß der Figuren 2 - 4 - sind mehrere separate Luftausströmer 9 angebunden, über die individuell Luft in die zugeordneten Fahrzeugbereiche respektive Sitzpositionsbereiche ausgeblasen werden kann. Jeder Luftausströmer 9 ist über die Steuerungseinrichtung 5 individuell ansteuerbar, kann also in seinem Öffnungsgrad individuell gesteuert werden. Es kann eine reine Auf-Zu-Steuerung sein, alternativ kann der Öffnungsgrad auch zwischen den Maximalpositionen beliebig verstellt werden, um so die Menge der ausgeblasenen Luft variieren zu können. Darüber hinaus ist es denkbar, über die Steuerungseinrichtung 5 auch die Ausblasrichtung einstellen zu können, das heißt, dass eine entsprechende Lamellenanordnung oder dergleichen an den Luftauströmer 9 in horizontaler und/oder vertikaler Richtung verstellt werden kann, um die Ausblasrichtung einstellen und in öffnen und schließen zu können. Für sämtliche Verstellvorgänge an den Luftauströmern weist jeder Luftausströmer eine oder mehrere geeignete Aktoren auf, die über die Steuerungseinrichtung 5 angesteuert werden.

Die Figuren 2 - 4 zeigen Aufsichten eines erfindungsgemäßen Kraftfahrzeugs 1, das im gezeigten Beispiel über fünf Luftleitkanäle 8a, 8b, 8c, 8d, 8e verfügt, die sich allesamt in Fahrzeuglängsrichtung erstrecken. An jedem Luftleitkanal 8a - 8e sind mehrere Luftausströmer angebunden, die über den jeweiligen Luftleitkanal mit Luft versorgt werden. Am Luftleitkanal 8a sind drei Luftausströmer 9a', 9a", 9a‴ angebunden, am Luftleitkanal 8b zwei Luftausströmer 9b', 9b", am mittigen Luftleitkanal 9c sind beidseits jeweils drei Luftausströmer angebunden, nämlich zur Beifahrerseite hin die Luftausströmer 9c1', 9c1", 9c1‴, sowie zur Fahrerseite hin die drei Luftausströmer 9c2', 9c2", 9c2‴. Am Luftleitkanal 8d sind wiederum zwei Luftausströmer angebunden, nämlich die Luftausströmer 9d', 9d", während am an der Fahrerseite seitlichen vorbeilaufenden Luftleitkanal 9e drei Luftausströmer 9e', 9e", 9e‴ angebunden sind.

Wie die Fig. 2 zeigt, sind die beiden Luftleitkanäle 8a und 8e seitlich der beiden Sitze 2a und 2b geführt, sie erstrecken sich beispielsweise im Bereich der Türen 10a, 10b beziehungsweise 11a, 11b oder seitlich am Fahrzeugboden.

Die beiden Luftleitkanäle 8b und 8d verlaufen im Bereich des Fahrzeugbodens und erstrecken sich unterhalb der Sitze 2a, 2b.

Der mittige Luftleitkanal 8c verläuft im Bereich der Fahrzeugmitte längs der Mittelkonsole, er verläuft also zwischen den beiden Sitzen 2a, 2b, befindet sich also ebenfalls seitlich der beiden Sitze 2a, 2b.

Beim Ausführungsbeispiel gemäß Fig. 2 sind die beiden Sitze 2a, 2b in einer vorderen Position. Es sei angenommen, dass beide Sitze 2a, 2b besetzt sind, was über eine geeignete Sitzbelegungserfassung, beispielsweise als Teil der Sitzeinstelleinrichtung 3, erfasst werden kann oder über die Kameraeinrichtung 7.

Wenngleich nicht nähere dargestellt, steuert die Steuerungseinrichtung 5 natürlich auch entsprechende Ventile oder Klappen oder dergleichen, über die die Verteilung der vom Klimagerät zugeführten Luft auf die einzelnen Luftleitkanäle 8a, 8e gesteuert werden kann, so dass die Luft quasi beliebig verteilt werden kann.

Im Ausführungsbeispiel gemäß Fig. 2 steuert die Steuerungseinrichtung 5 die Luftauslässe 9a', 9b', 9c1', 9c2', 9d' und 9e' an, die bezogen auf die Sitzposition bestmöglich positioniert sind. Alle anderen Luftausströmer bleiben geschlossen, Luft wird also nur über diese sechs Luftausströmer ausgeblasen. Die Ist-Position der Sitze 2a, 2b wird, wie beschrieben, über die Sitzverstelleinrichtung 3 erfasst, die gleichzeitig als Positionserfassungseinrichtung dient.

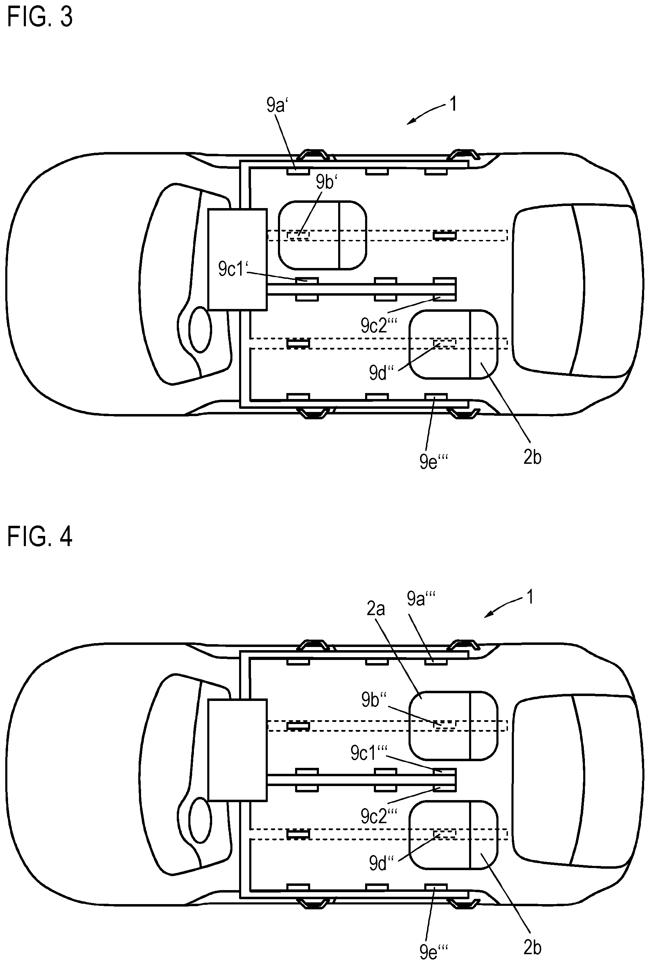

Beim Ausführungsbeispiel gemäß Fig. 3 wurde der Sitz 2b maximal nach hinten verschoben, währen der Sitz 2a in der ursprünglichen Position verbleibt. In diesem Fall ändert sich das Ansteuerbild der Luftausströmer. Während bezüglich des Sitzes 2a nach wie vor die Luftausströmer 9a', 9b', 9c1' über die Steuereinrichtung 5 geöffnet werden, werden bezüglich des Sitzes 2b die Luftausströmer 9c2‴, 9d", 9e‴ geöffnet, da nun diese optimal in Bezug auf die erfasste Ist-Position des Sitzes 2b positioniert sind. Alle anderen Luftausströmer bleiben geschlossen, das heißt, dass, wenn angenommener Maßen der Sitz 2b von der Position gemäß Fig. 2 an die Position gemäß Fig. 3 verschoben wird, mit dem Verschieben auch die vormals geöffneten Luftausströmer 9c2', 9d', 9e' geschlossen werden.

Ist auch der Sitz 2a in die hinterer Position verschoben worden, ändert sich auch zu diesem das Ansteuerbild der Luftausströmer. Anstelle der vormals geöffneten Luftausströmer 9a', 9b', 9c1' sind nunmehr die dem Sitz 2a zugeordneten und bestmöglich zur erfassten Ist-Position des Sitzes 2a positionierten Luftausströmer 9a‴, 9b", 9c1‴ über die Steuerungseinrichtung 5 geöffnet.

Für den Fall, dass einer der Sitze 2a, 2b eine mittlere Position zwischen den beiden Endpositionen einnimmt, werden entsprechend die bestmöglichst positionierten Luftausströmer, die bisher noch nicht geöffnet wurden, entsprechend geöffnet und andere vormals offene Luftausströmer geschlossen.

Die Positionserfassung der einzelnen Sitze 2a, 2b erfolgt, wie beschrieben, über die Sitzverstelleinrichtung 3, die als entsprechende, die tatsächliche Sitzverstellung erwirkende Einrichtung sämtliche Positionsdaten liefern kann. Über die Einrichtung 7, also die Kamera, können weitere Informationen in Bezug auf die Kopfposition der auf dem Sitz befindlichen Person erfasst werden und Ähnliches. All diese Informationen können in die Steuerung der Lüftungseinrichtung 4 über die Steuerungseinrichtung 5 eingehen.

Die Einstellung der Lüftungseinrichtung 4 kann über eine entsprechende Einstelleinrichtung 12, vorzugsweise einen Touchscreen oder dergleichen, der beispielsweise prominent am Armaturenbrett zwischen den beiden Sitzen 2a, 2b angeordnet ist, erfolgen. Jede Person kann individuell den Bereich ihrer Klimatisierungszone einstellen, sowohl hinsichtlich der Richtung, aus der sie Luft empfangen möchte (mehr im oberen Bereich oder im unteren Bereich etc.), der Luftmenge respektive der Ausblasstärke, wie auch natürlich der Temperatur. Anstelle einer zentralen Einstelleinrichtung 12 ist es aber auch denkbar, diese sitzindividuell beispielsweise im Bereich der Türe oder den Sitzarmlehnen oder der Mittelkonsole anzubringen. Auch kann über diese Einstelleinrichtung beispielsweise ein luftzugsfreier Bereich definiert werden und Ähnliches.

Insgesamt ermöglicht die erfindungsgemäß vorgesehene Lüftungseinrichtung eine effiziente, homogene, räumliche Anströmung der respektive jeder auf einem Sitz befindlichen Person, das heißt, dass quasi eine dreidimensionale Anströmung möglich ist. Dies gilt umso mehr, wenn auch, wie vorliegend nicht gezeigt, gegebenenfalls zusätzlich ein oder mehrere Luftleitkanäle im Dachbereich verlaufen, so dass auch eine Anströmung von oben möglich ist.

## Patentansprüche

1. Kraftfahrzeug mit einer Lüftungseinrichtung (4) mit mehreren separaten Luftausströmern (9, 9a', 9a", ..., 9e", 9e‴) sowie einer den Lüftungsbetrieb steuernden Steuerungseinrichtung (5),
**dadurch gekennzeichnet,**
**dass** an wenigstens einem sich in Fahrzeuglängsrichtung erstreckenden Luftleitkanal (8a, 8b, 8c, 8d, 8e) über dessen Länge verteilt mehrere zueinander beabstandet angeordnete Luftausströmer (9, 9a', 9a", ..., 9e", 9e‴) angebunden sind, wobei der Öffnungsgrad jedes Luftausströmers (9, 9a', 9a", ..., 9e", 9e‴) über die Steuerungseinrichtung (5) in Abhängigkeit wenigstens einer Positionsinformation wenigstens eines im Fahrzeug angeordneten, in Fahrzeuglängsrichtung verfahrbaren Sitzes (2, 2a, 2b), dem die Luftausströmer (9, 9a', 9a", ..., 9e", 9e‴) zugeordnet sind, einstellbar ist.

2. Kraftfahrzeug nach Anspruch 1,
**dadurch gekennzeichnet,**
**dass** zwei in Fahrzeuglängsrichtung verfahrbaren Sitze (2a, 2b) vorgesehen sind, denen jeweils mehrere separate Luftausströmer (9, 9a', 9a", ..., 9e", 9e‴), die an einem Luftleitkanal (8a, 8b, 8c, 8d, 8e) angebunden sind, vorgesehen sind.

3. Kraftfahrzeug nach Anspruch 1 oder 2,
**dadurch gekennzeichnet,**
**dass**, gesehen in Fahrzeugquerrichtung, mehrere sich in Fahrzeuglängsrichtung erstreckende Luftleitkanäle (8a, 8b, 8c, 8d, 8e) vorgesehen sind, an denen jeweils mehrere Luftausströmer (9, 9a', 9a", ..., 9e", 9e‴), die über die Steuerungseinrichtung (5) in ihrem Öffnungsgrad einstellbar sind, vorgesehen sind.

4. Kraftfahrzeug nach Anspruch 2 oder 2 und 3,
**dadurch gekennzeichnet,**
**dass** wenigstens ein, gesehen in Fahrzeugquerrichtung, im Bereich der Fahrzeugmitte verlaufender Luftleitkanal (8c) zwischen den beiden Sitzen (a, 2b) vorgesehen ist.

5. Kraftfahrzeug nach Anspruch 4,
**dadurch gekennzeichnet,**
**dass** nur ein Luftleitkanal (8c) zwischen beiden Sitzen (2a, 2b) vorgesehen ist, wobei zu beiden Sitzen (2a, 2b) gerichtete Luftausströmer (9c1', 9c1", ..., 9c2", 9c2‴) an dem Luftleitkanal (8c) angebunden sind.

6. Kraftfahrzeug nach Anspruch 4,
**dadurch gekennzeichnet,**
**dass** zwischen beiden Sitzen (2a, 2b) zwei separate Luftleitkanäle (8c) vorgesehen sind, wobei am einen Luftleitkanal (8c) die dem einen Sitz (2a) zugeordneten Luftausströmer (9c1', 9c1 ", 9c1‴) und am anderen Luftleitkanal (8c) die dem anderen Sitz (2b) zugeordneten Luftausströmer (9c2', 9c2", 9c2‴) angebunden sind.

7. Kraftfahrzeug nach einem der vorangehenden Ansprüche,
**dadurch gekennzeichnet,**
**dass** ein oder jeweils ein Luftleitkanal (8b, 8d) mit daran angebundenen Luftausströmern (9b', 9b", 9d', 9d") sich unterhalb eines Sitzes (2a, 2b) erstreckt.

8. Kraftfahrzeug nach einem der vorangehenden Ansprüche,
**dadurch gekennzeichnet,**
**dass** ein oder jeweils ein Luftleitkanal mit daran angebundenen Luftausströmern sich im Bereich der Seiten des Fahrzeugbodens erstreckt.

9. Kraftfahrzeug nach einem der vorangehenden Ansprüche,
**dadurch gekennzeichnet,**
**dass** ein oder jeweils ein Luftleitkanal (8a, 8e) mit daran angebundenen Luftausströmern (9a', 9a", 9a‴, 9e', 9e", 9e‴) sich im Bereich einer benachbart zu dem jeweiligen Sitz (2a, 2b) angeordneten Tür (10a, 10b, 11a, 11b) erstreckt.

10. Kraftfahrzeug nach einem der vorangehenden Ansprüche,
**dadurch gekennzeichnet,**
**dass** ein oder jeweils ein Luftleitkanal mit daran angebundenen Luftausströmern sich im Bereich des Dachs erstreckt.

11. Kraftfahrzeug nach einem der vorangehenden Ansprüche,
**dadurch gekennzeichnet,**
**dass** dem oder jedem Sitz (2a, 2b) eine Positionserfassungseinrichtung (3) zugeordnet ist, die die wenigstens eine Positionsinformation liefert.

12. Kraftfahrzeug nach Anspruch 11,
**dadurch gekennzeichnet,**
**dass** die Positionserfassungseinrichtung (3) zusätzlich zum Erfassen der Sitzposition in Fahrzeuglängsrichtung auch der Erfassung der Höhe des Sitzes (2a, 2b) und/oder der Neigung einer Sitzlehne ausgebildet ist, wobei die Steuerungseinrichtung (5) zusätzlich zur Berücksichtigung dieser Sitzinformation ausgebildet ist.

13. Kraftfahrzeug nach einem der vorangehenden Ansprüche,
**dadurch gekennzeichnet,**
**dass** über die Steuerungseinrichtung (5) zusätzlich die Luftausblasrichtung der Luftausströmer (9, 9a', 9a", ..., 9e", 9e‴) einstellbar ist.

14. Kraftfahrzeug nach einem der vorangehenden Ansprüche,
**dadurch gekennzeichnet,**
**dass** wenigstens eine Einrichtung (7) zur Erfassung wenigstens einer Personeninformation betreffend eine auf einem Sitz (2a, 2b) befindliche Person vorgesehen ist, wobei die Steuerungseinrichtung (5) zur Steuerung in Abhängigkeit auch der Personeninformation ausgebildet ist.

15. Kraftfahrzeug nach einem der vorangehenden Ansprüche,
**dadurch gekennzeichnet,**
**dass** die Einrichtung (7) zur Erfassung einer Sitzbelegung und/oder der Position bestimmter Körperteile einer auf einem Sitz (2a, 2b) befindlichen Person ausgebildet ist.

16. Kraftfahrzeug nach einem der vorangehenden Ansprüche,
**dadurch gekennzeichnet,**
**dass** eine gemeinsame oder separate Einstellmittel (12) personenindividuellen zum Einstellen der Lüftungseinrichtung (4) vorgesehen sind.

17. Kraftfahrzeug nach Anspruch 16,
**dadurch gekennzeichnet,**
**dass** ein gemeinsames oder separate Einstellmittel (12) in Form eines Touchscreens oder Touchfeldes im Bereich eines Armaturenbretts, einer Mittelkonsole oder der Sitze (2a, 2b) oder Türen (10a, 10b, 11a, 11b) vorgesehen ist oder sind.

## Claims

1. Motor vehicle having a ventilation apparatus (4) having a plurality of separate air vents (9, 9a', 9a", ..., 9e", 9e‴) and a control apparatus (5), which controls the ventilation operation,
**characterised in that**
a plurality of air vents (9, 9a', 9a", ..., 9e", 9e'") arranged spaced apart from each other is connected to at least one air duct (8a, 8b, 8c, 8d, 8e) extending in the vehicle longitudinal direction distributed over its length, wherein the degree of opening of each air vent (9, 9a', 9a", ..., 9e", 9e‴) can be set by the control apparatus (5) in accordance with at least one item of position information of at least one seat (2, 2a, 2b) with which the air vents (9, 9a', 9a", ..., 9e", 9e'") are associated, which at least one seat is arranged in the vehicle and can be moved in the vehicle longitudinal direction.

2. Motor vehicle according to claim 1,
**characterised in that**
two seats (2a, 2b) which can be moved in the vehicle longitudinal direction are provided, each of which is provided with a plurality of separate air vents (9, 9a', 9a", ..., 9e", 9e‴) which are connected to an air duct (8a, 8b, 8c, 8d, 8e).

3. Motor vehicle according to claim 1 or 2,
**characterised in that**
viewed in the vehicle transverse direction, a plurality of air ducts (8a, 8b, 8c, 8d, 8e) extending in the vehicle longitudinal direction are provided, on each of which a plurality of air vents (9, 9a', 9a", ..., 9e", 9e‴), the degree of opening of which can be set by the control apparatus (5), are provided.

4. Motor vehicle according to claim 2 or 2 and 3,
**characterised in that**
at least one air duct (8c) is provided between the two seats (a, 2b) in the region of the centre of the vehicle, viewed in the vehicle transverse direction.

5. Motor vehicle according to claim 4,
**characterised in that**
only one air duct (8c) is provided between the two seats (2a, 2b), wherein air vents (9c1', 9c1", ..., 9c2", 9c2‴) directed towards the two seats (2a, 2b) are connected to the air duct (8c).

6. Motor vehicle according to claim 4,
**characterised in that**
two separate air ducts (8c) are provided between the two seats (2a, 2b), wherein the air vents (9c1', 9c1", 9c1"') associated with the one seat (2a) are connected to one air duct (8c) and the air vents (9c2', 9c2", 9c2"') associated with the other seat (2b) are connected to the other air duct (8c).

7. Motor vehicle according to any of the preceding claims,
**characterised in that**
one or in each case one air duct (8b, 8d) having air vents (9b', 9b", 9d', 9d") connected thereto extends below a seat (2a, 2b).

8. Motor vehicle according to any of the preceding claims,
**characterised in that**
one or in each case one air duct having air vents connected thereto extends in the region of the sides of the vehicle floor.

9. Motor vehicle according to any of the preceding claims,
**characterised in that**
one or in each case one air duct (8a, 8e) having air vents (9a', 9a", 9a'", 9e', 9e", 9e‴) connected thereto extends in the region of a door (10a, 10b, 11a, 11b) arranged adjacent to the respective seat (2a, 2b).

10. Motor vehicle according to any of the preceding claims,
**characterised in that**
one or in each case one air duct having air vents connected thereto extends in the region of the roof.

11. Motor vehicle according to any of the preceding claims,
**characterised in that**
the or each seat (2a, 2b) is associated with a position detection apparatus (3) which supplies the at least one item of position information.

12. Motor vehicle according to claim 11,
**characterised in that**
the position detection apparatus (3), in addition to detecting the seat position in the vehicle longitudinal direction, is also designed to detect the height of the seat (2a, 2b) and/or the inclination of a seat back, wherein the control apparatus (5) is additionally designed to take this item of seat information into account.

13. Motor vehicle according to any of the preceding claims,
**characterised in that**
the air outlet direction of the air vents (9, 9a', 9a", ..., 9e", 9e‴) can additionally be set by the control apparatus (5).

14. Motor vehicle according to any of the preceding claims,
**characterised in that**
at least one apparatus (7) is provided for detecting at least one item of personal information relating to a person located on a seat (2a, 2b), wherein the control apparatus (5) is also designed for control in accordance with the item of personal information.

15. Motor vehicle according to any of the preceding claims,
**characterised in that**
the apparatus (7) is designed to detect a seat occupancy and/or the position of specific body parts of a person located on a seat (2a, 2b).

16. Motor vehicle according to any of the preceding claims,
**characterised in that**
a common or separate adjustment means (12) is provided for individual persons for adjusting the ventilation apparatus (4).

17. Motor vehicle according to claim 16,
**characterised in that**
a common or separate adjustment means (12) in the form of a touch screen or touch panel is or are provided in the region of a dashboard, a centre console or the seats (2a, 2b) or doors (10a, 10b, 11a, 11b).

## Revendications

1. Véhicule automobile avec un dispositif d'aération (4) avec plusieurs buses d'aération (9, 9a', 9a", ..., 9e", 9e‴) séparées ainsi qu'un dispositif de commande (5) commandant le fonctionnement de l'aération,
**caractérisé en ce que**
plusieurs buses d'aération (9, 9a', 9a", ..., 9e", 9e‴) agencées à distance les unes des autres sont liées à au moins un canal de conduite d'air (8a, 8b, 8c, 8d, 8e) s'étendant dans la direction longitudinale du véhicule réparties sur sa longueur, dans lequel le degré d'ouverture de chaque buse d'aération (9, 9a', 9a", ..., 9e", 9e'") est réglable par le biais du dispositif de commande (5) en fonction d'au moins une information de position au moins d'un siège (2, 2a, 2b) déplaçable dans la direction longitudinale du véhicule, agencé dans le véhicule, auquel sont associées les buses d'aération (9, 9a', 9a", ..., 9e", 9e‴).

2. Véhicule automobile selon la revendication 1,
**caractérisé en ce que**
deux sièges (2a, 2b) déplaçables dans la direction longitudinale du véhicule sont prévus, au niveau desquels sont prévues respectivement plusieurs buses d'aération (9, 9a', 9a", ..., 9e", 9e‴) séparées qui sont liées à un canal de conduite d'air (8a, 8b, 8c, 8d, 8e).

3. Véhicule automobile selon la revendication 1 ou 2,
**caractérisé en ce que**
vu dans la direction transversale du véhicule, plusieurs canaux de conduite d'air (8a, 8b, 8c, 8d, 8e) s'étendant dans la direction longitudinale du véhicule sont prévus, au niveau desquels sont prévues respectivement plusieurs buses d'aération (9, 9a', 9a", ..., 9e", 9e‴), qui sont réglables par le biais du dispositif de commande (5) dans leur degré d'ouverture.

4. Véhicule automobile selon la revendication 2 ou 2 et 3,
**caractérisé en ce que**
au moins un canal de conduite d'air (8c) s'étendant dans la zone du milieu du véhicule, vu dans la direction transversale du véhicule, est prévu entre les deux sièges (a, 2b).

5. Véhicule automobile selon la revendication 4,
**caractérisé en ce que**
un seul canal de conduite d'air (8c) est prévu entre les deux sièges (2a, 2b), dans lequel des buses d'aération (9c1', 9c1", ..., 9c2", 9c2''') dirigées vers les deux côtés (2a, 2b) sont liées au canal de conduite d'air (8c).

6. Véhicule automobile selon la revendication 4,
**caractérisé en ce que**
entre les deux sièges (2a, 2b) sont prévus deux canaux de conduite d'air (8c) séparés, dans lequel les buses d'aération (9c1', 9c1", 9c1‴) associées à l'un siège (2a) sont liées à un canal de conduite d'air (8c) et les buses d'aération (9c2', 9c2", 9c2‴) associées à l'autre siège (2b) sont liées à l'autre canal de conduite d'air (8c).

7. Véhicule automobile selon l'une quelconque des revendications précédentes,
**caractérisé en ce que**
un ou respectivement un canal de conduite d'air (8b, 8d) s'étend avec des buses d'aération (9b', 9b", 9d', 9d") liées à celui-ci en dessous d'un siège (2a, 2b).

8. Véhicule automobile selon l'une quelconque des revendications précédentes,
**caractérisé en ce que**
un ou respectivement un canal de conduite d'air s'étend avec des buses d'aération liées à celui-ci dans la zone des côtés du plancher de véhicule.

9. Véhicule automobile selon l'une quelconque des revendications précédentes,
**caractérisé en ce que**
un ou respectivement un canal de conduite d'air (8a, 8e) s'étend avec des buses d'aération (9a', 9a", 9a‴, 9e', 9e", 9e‴) liées à celui-ci dans la zone d'une porte (10a, 10b, 11a, 11b) agencée de manière contiguë au siège (2a, 2b) respectif.

10. Véhicule automobile selon l'une quelconque des revendications précédentes,
**caractérisé en ce que**
un ou respectivement un canal de conduite d'air s'étend avec des buses d'aération liées à celui-ci dans la zone du toit.

11. Véhicule automobile selon l'une quelconque des revendications précédentes,
**caractérisé en ce que**
un dispositif de détection de position (3) est associé au ou à chaque siège (2a, 2b), lequel fournit l'au moins une information de position.

12. Véhicule automobile selon la revendication 11,
**caractérisé en ce que**
le dispositif de détection de position (3) est réalisé, outre pour la détection de la position de siège dans la direction longitudinale du véhicule, également pour la détection de la hauteur du siège (2a, 2b) et/ou l'inclinaison d'un dossier, dans lequel le dispositif de commande (5) est réalisé en outre pour tenir compte de cette information de siège.

13. Véhicule automobile selon l'une quelconque des revendications précédentes,
**caractérisé en ce que**
le sens de soufflage d'air des buses d'aération (9, 9a', 9a", ..., 9e", 9e‴) est en outre réglable par le biais du dispositif de commande (5).

14. Véhicule automobile selon l'une quelconque des revendications précédentes,
**caractérisé en ce que**
au moins un appareil (7) est prévu pour la détection au moins d'une information de personne concernant une personne se trouvant sur un siège (2a, 2b), dans lequel le dispositif de commande (5) est réalisé pour la commande en fonction aussi de l'information de personne.

15. Véhicule automobile selon l'une quelconque des revendications précédentes,
**caractérisé en ce que**
l'appareil (7) est réalisé pour la détection d'une occupation de siège et/ou de la position de parties corporelles déterminées d'une personne se trouvant sur un siège (2a, 2b).

16. Véhicule automobile selon l'une quelconque des revendications précédentes,
**caractérisé en ce que**
un moyen de réglage (12) commun ou des moyens de réglage séparés est ou sont prévus de manière individuelle à la personne pour le réglage du dispositif d'aération (4).

17. Véhicule automobile selon la revendication 16,
**caractérisé en ce que**
un moyen de réglage (12) commun ou des moyens de réglage séparés est ou sont prévus sous la forme d'un écran tactile ou champ tactile dans la zone d'un tableau de bord, d'une console centrale ou des sièges (2a, 2b) ou des portes (10a, 10b, 11a, 11 b).
